# EUROPÄISCHE PATENTANMELDUNG

(11) **EP 2 570 516 A2**
(43) Veröffentlichungstag der Anmeldung: **20.03.2013**
(21) Anmeldenummer: 12181449.5
(22) Anmeldetag: 23.08.2012
(51) Int. Cl.: C23C 26/00

(54) **Verfahren zum Aufbringen einer Lagerschicht auf einen Gleitlagerbauteilkörper sowie Gleitlagerbauteil**

(30) Priorität: 15.09.2011 DE 102011113551
(71) Anmelder: Robert Bosch GmbH, 70442 Stuttgart (DE)
(72) Erfinder: Gaertner, Bernd, 89194 Schnuerpflingen (DE); Kasper, Stefan, 73431 Aalen (DE); Kraume, Stefan, 89250 Senden (DE)
(74) Vertreter: Thürer, Andreas

(57) **Zusammenfassung**

Die Erfindung bezieht sich auf ein Verfahren zum Aufbringen einer Lagerschicht auf einen Gleitlagerbauteilkörper, wobei ein Gleitlagerwerkstoffkörper aus einem Gleitlagerwerkstoff auf einer Basisfläche des Gleitlagerbauteils angeordnet und fest mit diesem verbunden wird. Die Erfindung betrifft außerdem ein Gleitlagerbauteil mit einer Lagerschicht.

Ein schnelles und energetisch günstiges sowie prozesssicheres Verfahren besteht darin, dass der Gleitlagerwerkstoffkörper auf die Basisfläche des Gleitlagerbauteilkörpers aufgelegt wird, dass ein Induktor in berührungslose Position zu den Körpern gebracht wird, dass ein Wechselstrom durch den Induktor geleitet wird und dadurch zumindest einer der Körper induktiv erwärmt wird, wodurch im Grenzbereich zwischen Gleitlagerwerkstoffkörper und Gleitlagerbauteilkörper ein Mischbereich der Materialien von Gleitlagerwerkstoffkörper und Gleitlagerbauteilkörper erzeugt wird.

## Beschreibung

Die Erfindung bezieht sich auf ein Verfahren zum Aufbringen einer Lagerschicht auf einen Gleitlagerbauteilkörper, wobei ein Gleitlagerwerkstoffkörper aus einem Gleitlagerwerkstoff auf einer Basisfläche des Gleitlagerbauteils angeordnet und fest mit diesem verbunden wird. Die Erfindung betrifft außerdem ein Gleitlagerbauteil mit einer Lagerschicht.

In hydrostatischen Verdrängereinheiten, insbesondere in hydrostatischen Axialkolbenmaschinen wie Axialkolbenmotoren und Axialkolbenpumpen werden Lagerschichten für die Gleitlagerbauteile, insbesondere Gleitlagerschalen, Gleitschuhe der Verdrängerkolben, Buchsen und Steuerscheiben aus Werkstoffen wie Stahl, Gusseisen, Messing, Blei-Bronze oder Graphit-Bronze verwendet. Hergestellt werden die Lagerschichten durch Aufschmelzen oder Aufsintern bei hohen Temperaturen.

Diese Verfahren führen zu hohen Ausschuss- und Nacharbeitsquoten und zu starken Einschränkungen in der Werkstoffwahl.

Aufgabe der Erfindung ist es daher, ein Verfahren zum Aufbringen einer Lagerschicht auf einen Gleitlagerbauteilkörper sowie ein Gleitlagerbauteil der eingangs genannten Art zu schaffen, bei dem diese Nachteile vermieden werden, das schnell und energetisch günstig ausführbar ist und das eine Verwendung höherfester Gleitlagerwerkstoffe für die Lagerschicht und Standardstähle oder verschiedene Gusseisensorten für den Gleitlagerbauteilkörper erlauben.

Diese Aufgabe wird für ein Verfahren dadurch gelöst, dass der Gleitlagerwerkstoffkörper auf die Basisfläche des Gleitlagerbauteilkörpers aufgelegt wird, dass ein Induktor in berührungslose Position zu den Körpern gebracht wird, dass ein Wechselstrom durch den Induktor geleitet wird und dadurch zumindest einer der Körper induktiv erwärmt wird, wodurch im Grenzbereich zwischen Gleitlagerwerkstoffkörper und Gleitlagerbauteilkörper ein Mischbereich der Materialien von Gleitlagerwerkstoffkörper und Gleitlagerbauteilkörper erzeugt wird.

Das Verfahren benötigt nur einen geringen Materialeinsatz, ist einfach und schnell durchführbar und führt zu einer festen Verbindung des Gleitlagerwerkstoffs mit dem Gleitlagerbauteilkörper, so dass in einem prozesssicheren Verfahren ein den Belastungen standhaltendes Gleitlagerbauteil entsteht.

Die aufzubringende Energie ist relativ gering.

Durch die Induktion erfolgt ein elektromagnetisches Rühren der Schmelze des Gleitlagerwerkstoffkörpers zur Erzielung eines homogenen Gefüges.

Da das Verfahren einfach ist und eine hohe Prozesssicherheit aufweist, kommt es zu einer erheblichen Senkung der Ausschuss- und Nacharbeitsquoten.

Das Verfahren erlaubt die Verwendung höherfester Gleitlagerwerkstoffe für die Lagerschicht und kostengünstiger Standardstähle oder Gusseisensorten für den Gleitlagerbauteilkörper. Gleitlagerwerkstoffe, die bleifrei sind, sind problemlos verwendbar.

Bei einer Ausbildung des Verfahrens gemäß Patentanspruch 2 wird der Gleitlagerwerkstoffkörper induktiv und der Gleitlagerbauteilkörper durch den Kontakt mit dem Gleitlagerbauteil miterwärmt. Hier erfolgt ein elektromagnetisches Rühren der Schmelze des Gleitlagerwerkstoffkörpers.

Bei einer Ausbildung des Verfahrens gemäß Patentanspruch 3 wird der Gleitlagerbauteilkörper induktiv und der Gleitlagerwerkstoffkörper durch den Kontakt mit dem Gleitlagerbauteil miterwärmt.

Grundsätzlich ist es auch denkbar, einen Induktor zu verwenden, der eine solche axiale Erstreckung hat, dass Wirbelströme sowohl im Gleitlagerwerkstoffkörper als auch im Gleitlagerbauteilkörper induziert und somit beide Körper induktiv erwärmt werden. Denkbar ist es auch, zwei Induktoren zu verwenden, einen für den Gleitlagerwerkstoffkörper und einen für den Gleitlagerbauteilkörper.

Der Mischbereich kann durch gegenseitige Diffusion des Gleitlagerwerkstoffs und des Materials des Gleitlagerbauteils erzeugt werden.

Der Mischbereich kann durch Verschmelzen des Gleitlagerwerkstoffs und des Materials des Gleitlagerbauteils erzeugt werden.

Bevorzugt ist die Schmelztemperatur des Gleitlagerwerkstoffs niedriger als die des Materials des Gleitlagerbauteilkörpers. Dabei tritt eine flüssige Phase des Gleitlagerwerkstoffs am Gleitlagerbauteilkörper auf. Es kommt somit zu einer Diffusionszone und zu einer stoffschlüssigen Verbindung des Gleitlagerwerkstoffs mit dem Werkstoff des Gleitlagerbauteilkörpers im festen Zustand der Werkstoffe.

Der Gleitlagerwerkstoffkörper kann ein Sinterbauteil oder ein sprühkompaktiertes Bauteil sein.

Besonders geeignete, weil gegenüber Stahl einen geringeren spezifischen elektrischen Widerstand aufweisende Gleitlagerwerkstoffe können Messing oder Bronze oder Weißmetall sein.

Vorzugsweise ist der Werkstoff des Gleitlagerbauteils Stahl oder Gusseisen.

In einer weiteren Lösung der Aufgabe ist das Gleitlagerbauteil mit einer nach dem oben beschriebenen Verfahren aufgebrachten Lagerschicht auf einem Gleitlagerbauteilkörper ein Bauteil einer hydrostatischen Verdrängermaschine, die eine Axialkolbenmaschine sein kann, wobei das Gleitlagerbauteil eine Zylindertrommel und/oder eine Steuerplatte und/oder ein Kolbengleitschuh und/oder eine Schrägscheibe und/oder ein Kolben einer hydrostatischen Verdrängermaschine sein kann.

Damit sind diese eine Lagerschicht aufweisende Gleitlagerbauteile kostengünstig bei hoher Verwindungsfestigkeit und damit Belastbarkeit der Lagerschicht herstellbar.

Das Gleitlagerbauteil ist bevorzugt ein Bauteil einer hydrostatischen Axialkolbenmaschine, insbesondere eine Zylindertrommel, die in Kolbenbohrungen Verdrängerkolben aufnimmt, die an der der Basisfläche gegenüberliegenden Seite aus der Zylindertrommel herausragen, und die an einer Basisfläche mit einer Steuerplatte zusammenwirkt, und/oder eine Steuerplatte und/oder eine Schrägscheibe und/oder ein Verdrängerkolben und/oder ein Kolbengleitschuh, über den ein Verdrängerkolben an der Schrägscheibe anliegt und an dieser entlanggleitet.

Zwei Ausführungsbeispiele eines erfindungsgemäßen Verfahrens werden im Folgenden anhand der Zeichnungen näher beschrieben. Es zeigen
- Figur 1: eine Prinzipdarstellung von Gleitlagerbauteilkörper, Gleitlagerwerkstoffkörper und Induktor, der zur induzierten Erwärmung des Gleitlagerwerkstoffkörpers angeordnet ist, in der Ausgangssituation des Verfahrens,
- Figur 2: eine Prinzipdarstellung entsprechend Figur 1 in einer Zwischensituation des Verfahrens,
- Figur 3: eine Prinzipdarstellung entsprechend Figur 1 in einer Endsituation des Verfahrens,
- Figur 4: eine Prinzipdarstellung von Gleitlagerbauteilkörper, Gleitlagerwerkstoffkörper und Induktor, der zur induzierten Erwärmung des Gleitlagerbauteilkörpers angeordnet ist, in der Ausgangssituation des Verfahrens,
- Figur 5: eine Prinzipdarstellung entsprechend Figur 4 in einer Zwischensituation des Verfahrens und
- Figur 6: eine Prinzipdarstellung entsprechend Figur 4 in einer Endsituation des Verfahrens,

In den Figuren ist als Gleitlagerbauteilkörper 1 ein Zylinder aus Stahl dargestellt, der mit der Lagerschicht eine Zylindertrommel einer Axialkolbenmaschine bildet. Auf eine Basisfläche 4 soll eine Lagerschicht 2 aus einem Gleitlagerwerkstoff aufgebracht werden. Zunächst wird dazu in fester Form ein zylindrischer Gleitlagerwerkstoffkörper 3 mit seinem einen stirnseitigen Ende mittig auf die Stirnseite 4 des Gleitlagerbauteilkörpers 1 aufgesetzt.

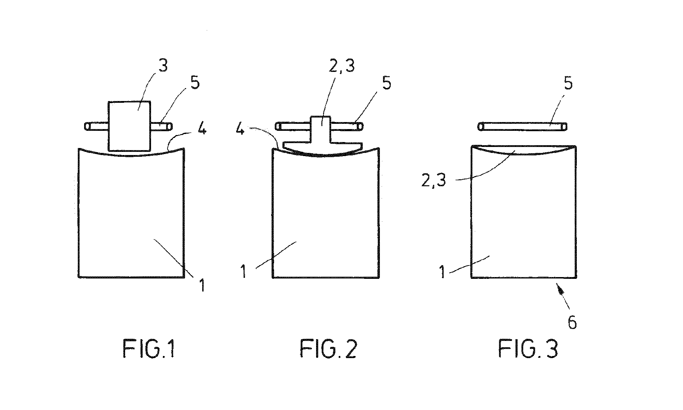

Bei dem durch die Figuren 1 bis 3 verdeutlichten Verfahren ist der Gleitlagerwerkstoffkörper 3 berührungslos von einem axial auf Höhe des Gleitlagerwerkstoffkörpers befindlichen Induktor 5 umgeben.

Wird nun ein Wechselstrom durch den Induktor geschickt, so wird der Gleitlagerwerkstoffkörper 3 induktiv erwärmt, wobei der Gleitlagerbauteilkörper durch den Kontakt zum Gleitlagerwerkstoffkörper durch Wärmeleitung mit erwärmt wird.

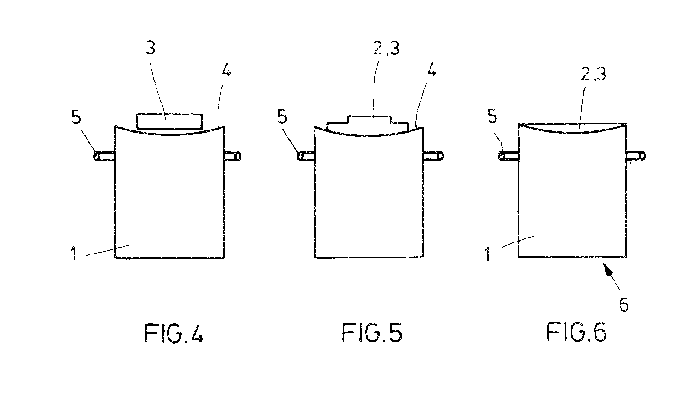

Bei dem durch die Figuren 4 bis 6 verdeutlichten Verfahren ist der Gleitlagerbauteilkörper 3 berührungslos von einem axial auf Höhe des Gleitlagerbauteilkörpers befindlichen Induktor 5 umgeben.

Wird hier ein Wechselstrom durch den Induktor geschickt, so wird der Gleitlagerbauteilkörper 3 induktiv erwärmt, wobei der Gleitlagerwerkstoffkörper durch den Kontakt zum Gleitlagerbauteilkörper durch Wärmeleitung mit erwärmt wird.

Der Gleitlagerwerkstoff des Gleitlagerwerkstoffkörpers 3 besitzt in beiden gezeigten Anordnungen einen niedrigeren Schmelzpunkt als der Werkstoff des Gleitlagerbauteilkörpers 1.

Dadurch wird das Gleitlagerwerkstoffkörper 3 auf dem Gleitlagerbauteilkörper anlegend geschmolzen. Schließlich bedeckt der Gleitlagerwerkstoff die ganze Basisfläche des Gleitlagerbauteilkörpers und bildet zusammen mit diesem das gewünschte Gleitlagerbauteil 6. Vorliegend ist dies die Zylindertrommel einer Axialkolbenmaschine in Schrägscheiben- oder in Schrägachsenbauweise, die in Kolbenbohrungen Verdrängerkolben aufnimmt, die an der der Basisfläche gegenüberliegenden Seite aus der Zylindertrommel herausragen, und die an einer Basisfläche mit einer Steuerplatte zusammenwirkt.

## Patentansprüche

1. Verfahren zum Aufbringen einer Lagerschicht auf einen Gleitlagerbauteilkörper, wobei ein Gleitlagerwerkstoffkörper aus einem Gleitlagerwerkstoff auf einer Basisfläche des Gleitlagerbauteilkörpers angeordnet und fest mit diesem verbunden wird, **dadurch gekennzeichnet, dass** der Gleitlagerwerkstoffkörper (3) auf die Basisfläche des Gleitlagerbauteilkörpers (1) aufgelegt wird, dass ein Induktor (5) in berührungslose Position zu den Körpern gebracht wird, dass ein Wechselstrom durch den Induktor geleitet wird und dadurch zumindest einer der Körper induktiv erwärmt wird, wodurch im Grenzbereich zwischen Gleitlagerwerkstoffkörper (3) und Gleitlagerbauteilkörper (1) ein Mischbereich der Materialien von Gleitlagerwerkstoffkörper (3) und Gleitlagerbauteilkörper (1) erzeugt wird.

2. Verfahren nach Anspruch 1, **dadurch gekennzeichnet, dass** sich ein Induktor in berührungslose Position axial auf Höhe des Gleitlagerwerkstoffkörpers (3) um diesen herum befindet, dass sich der Gleitlagerwerkstoffkörper (3) induktiv erwärmt und auf der Basisfläche (4) des Gleitlagerbauteilkörpers (1) anliegend schmilzt, wobei durch den Kontakt zwischen dem Gleitlagerwerkstoffkörper (3) und dem Gleitlagerbauteilkörper (1) auch der Gleitlagerbauteilkörper erwärmt wird.

3. Verfahren nach Anspruch 1, **dadurch gekennzeichnet, dass** sich ein Induktor (5) in berührungslose Position axial auf Höhe des Gleitlagerbauteilkörpers (1) um diesen herum befindet, dass sich der Gleitlagerbauteilkörper (1) induktiv erwärmt, wobei durch den Kontakt zwischen dem Gleitlagerwerkstoffkörper (3) und dem Gleitlagerbauteilkörper (1) auch der Gleitlagerwerkstoffkörper (3) erwärmt wird und auf der Basisfläche (4) des Gleitlagerbauteilkörpers (1) anliegend schmilzt.

4. Verfahren nach einem der vorhergehenden Ansprüche, **dadurch gekennzeichnet, dass** der Mischbereich durch Verschmelzen des Gleitlagerwerkstoffs und des Materials des Gleitlagerbauteilkörpers (1) erzeugt wird.

5. Verfahren nach einem der vorhergehenden Ansprüche, **dadurch gekennzeichnet, dass** der Gleitlagerwerkstoff einen niedrigeren Schmelzpunkt als der Werkstoff des Gleitlagerbauteilkörpers (1) aufweist.

6. Verfahren nach einem der vorhergehenden Ansprüche, **dadurch gekennzeichnet, dass** der Gleitlagerwerkstoffkörper (3) ein Sinterbauteil oder sprühkompaktiertes Bauteil ist.

7. Verfahren nach einem der vorhergehenden Ansprüche, **dadurch gekennzeichnet, dass** der Gleitlagerwerkstoff Messing oder Bronze oder Weißmetall ist.

8. Verfahren nach einem der vorhergehenden Ansprüche, **dadurch gekennzeichnet, dass** der Werkstoff des Gleitlagerbauteilkörpers (1) Stahl oder Gusseisen ist.

9. Gleitlagerbauteil (6) mit einer nach dem Verfahren nach einem der vorhergehenden Ansprüche aufgebrachten Lagerschicht (2), **dadurch gekennzeichnet, dass** es ein Bauteil einer hydrostatischen Verdrängermaschine ist.

10. Gleitlagerbauteil nach Anspruch 9, **dadurch gekennzeichnet, dass** es eine Zylindertrommel (6) und/oder eine Steuerplatte und/oder ein Kolbengleitschuh und/oder eine Schrägscheibe und/oder ein Kolben einer hydrostatischen Verdrängermaschine ist.
